# EUROPEAN PATENT SPECIFICATION

(11) **EP 4 187 507 B1**
(45) Date of publication and mention of the grant of the patent: **18.02.2026**
(21) Application number: 22207044.3
(22) Date of filing: 11.11.2022
(51) Int. Cl.: G06V 40/60, G06T 7/10, G06T 11/00

(54) **IMAGE CREATING APPARATUS**
BILDERZEUGUNGSGERÄT
APPAREIL DE CRÉATION D'IMAGE

(30) Priority: 25.11.2021 JP 2021190746
(43) Date of publication of application: 31.05.2023
(73) Proprietor: ASICS Corporation, Kobe-shi Hyogo 650-8555 (JP)
(72) Inventor: Sugimori, Chihiro, 650-8555 Hyogo (JP); Shiina, Ippei, 650-8555 Hyogo (JP)
(74) Representative: Marks & Clerk LLP

(56) References cited:
- WO-A1-2014/076622
- JP-A- 2009 021 958
- US-A1- 2017 061 647
- "New Trends and Developments in Biometrics", 28 November 2012, INTECH, ISBN: 978-953-51-0859-7, article BACA MIROSLAV ET AL: "Basic Principles and Trends in Hand Geometry and Hand Shape Biometrics", pages: 1 - 25, XP093039294, DOI: 10.5772/51912
- KHOKHER ROHIT ET AL: "Footprint Identification: Review of an Emerging Biometric Trait", vol. 397, no. 1, June 2021 (2021-06-01), DE, pages 2000246, XP093039314, ISSN: 1022-1360, Retrieved from the Internet <URL:https://onlinelibrary.wiley.com/doi/full-xml/10.1002/masy.202000246> DOI: 10.1002/masy.202000246
- MEDILOGIC: "FootScanner - medilogic", 8 November 2017 (2017-11-08), pages 1 - 5, XP093039319, Retrieved from the Internet <URL:https://web.archive.org/web/20171108233414/https://medilogic.com/en/footscanner/> [retrieved on 20230414]
- WABLOBY: "How to Blend Images and Create a Composite in Adobe Photoshop CC 2023", 14 September 2020 (2020-09-14), XP093039325, Retrieved from the Internet <URL:https://www.youtube.com/watch?v=icNXrgD08qE> [retrieved on 20230414]

## Description

### BACKGROUND OF THE INVENTION

### 1. Field of the Invention

The present invention relates to an image creating apparatus that creates a stamp on the basis of a digital image captured with an image capturing function.

### 2. Description of the Related Art

Since the physique of a human irreversibly changes with growth, there is the need to record a state of a sole or a palm for memory at a certain point of time. For this reason, it has been common to record a state of a sole or a palm by applying a paint to a sole or a palm of an infant and transferring the footprint or the handprint onto a sheet-like medium such as a square-shaped paper sheet for an autograph.

With the spread of digital cameras, an image of a foot sole or a palm is captured for recording a state of a foot sole or a palm. For this reason, it has also been attempted to extract the contour of a sole or a palm from a digital image, and create footprint or handprint data. Hereinafter, an image of a sole or a palm drawn by extracting its contour from a digital image will be referred to as a "stamp".

JP 2009-21958 A discloses that an image of a palm is captured with a digital camera, and a handprint extracted along the contour of the hand from the digital image is converted into a black-and-white image to be printed out.

When an image of a sole or a palm is captured with a digital camera as in the invention disclosed in JP 2009-21958 A, it is necessary to capture an image of the sole or the palm at a distance at which the sole or the palm is captured in a specific size. If the distance between the sole or palm, which is the object, and the digital camera is too long, the sole or the palm in a digital image is small, and it is difficult to identify the contour of the sole or the palm. If the distance between the sole or the palm and the digital camera is too short, on the other hand, the sole or the palm is not captured within the frame. In this manner, it is difficult to capture a digital image of a sole or a palm so that the sole or the palm has a specific size in the digital image. Unless a sole or a palm is captured in an appropriate size in an image, a stamp in an appropriate shape cannot be created.

The present invention has been made in view of the above, and aims to obtain an image creating apparatus that enables a user to capture a digital image of a sole or a palm so that the sole or the palm has a specific size in the digital image, and create a stamp from the digital image.

### SUMMARY OF THE INVENTION

In order to solve the above-described problem and achieve the object, an image creating apparatus according to claim 1 is provided. Further embodiments are defined in the dependent claims.

### BRIEF DESCRIPTION OF THE DRAWINGS

FIG. 1 is a diagram illustrating the configuration of an image creating apparatus according to a first embodiment of the present invention;
FIG. 2 is a flowchart illustrating a flow of operation of the image creating apparatus according to the first embodiment;
FIG. 3 is a diagram illustrating an example imaging screen on which a positioning guide of the image creating apparatus according to the first embodiment is displayed;
FIG. 4 is a diagram illustrating the configuration of an image creating apparatus according to a second embodiment of the present invention;
FIG. 5 is a diagram illustrating an example of the layout screen of the image creating apparatus according to the second embodiment;
FIG. 6 is a diagram illustrating another example of the layout screen of the image creating apparatus according to the second embodiment;
FIG. 7 is a diagram illustrating the configuration of an image creating apparatus according to a third embodiment of the present invention;
FIG. 8 is a diagram illustrating an example of the layout screen of the image creating apparatus according to the third embodiment;
FIG. 9 is a diagram illustrating an example of the layout screen on which a stamp and a part are being laid out with a template of the image creating apparatus according to the third embodiment;
FIG. 10 is a diagram illustrating the configuration of an image creating apparatus according to a fourth embodiment of the present invention;
FIG. 11 is a diagram illustrating an example of a practical image created by a third image creating unit of the image creating apparatus according to the fourth embodiment; and
FIG. 12 is a diagram illustrating an example hardware configuration of the image creating apparatuses according to the first to fourth embodiments.

### DETAILED DESCRIPTION OF THE PREFERRED EMBODIMENTS

The following is a detailed description of embodiments of image creating apparatuses according to the present invention, with reference to the drawings. Note that the present invention is not limited by the embodiments. In the embodiments described below, the same or common portions are denoted by the same reference numerals, and explanation of them will not be repeated.

### (First Embodiment)

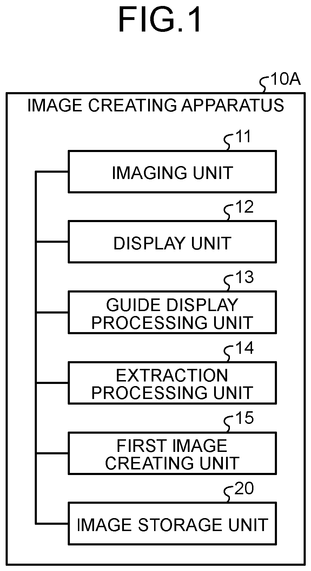

FIG. 1 is a diagram illustrating the configuration of an image creating apparatus according to a first embodiment of the present invention. An image creating apparatus 10A includes: an imaging unit 11 that has a digital image capturing function; a display unit 12 that displays an imaging screen for displaying a preview of an imaging range of the imaging unit 11; a guide display processing unit 13 that displays a positioning guide for a portion of a hand or a foot on the imaging screen; an extraction processing unit 14 that extracts a portion of the hand or the foot from the digital image captured by the imaging unit 11; a first image creating unit 15 that creates a stamp by transforming an image of the portion of the hand or the foot extracted by the extraction processing unit 14 into a silhouette image; and an image storage unit 20 that stores the image. An information terminal such as a smartphone terminal or a tablet terminal can be used as the image creating apparatus 10A, but some other apparatus may be used.

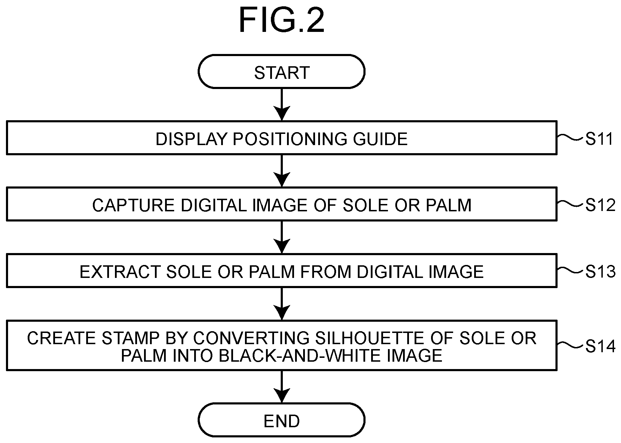

FIG. 2 is a flowchart illustrating a flow of operation of the image creating apparatus according to the first embodiment. In step S11, the guide display processing unit 13 displays a positioning guide on the imaging screen that displays a preview of an imaging range of the imaging unit 11.

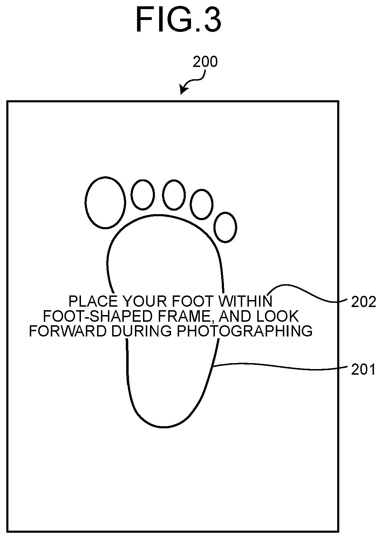

FIG. 3 is a diagram illustrating an example imaging screen on which a positioning guide of the image creating apparatus according to the first embodiment is displayed. On an imaging screen 200, a positioning guide 201 and an image capture guide message 202 are displayed. The image capture guide message 202 is a message for prompting the user to capture an image of the sole displayed on the imaging screen while keeping the sole within the positioning guide 201. As the positioning guide 201 is displayed on the imaging screen 200, the user can capture an image of the sole so that the sole has a specific size in the captured image, by releasing the shutter while maintaining the contour of the sole within the positioning guide 201. Also, the user can capture an image of the sole while maintaining the longitudinal direction of the foot in line with the vertical direction of the imaging screen 200, by releasing the shutter while keeping the contour of the sole within the positioning guide 201. The user can adjust the size of the sole in the imaging screen 200 by moving the image creating apparatus 10A toward or away from the foot. The user can adjust the longitudinal direction of the foot in the imaging screen 200 by changing the posture of the image creating apparatus 10A. In the example described herein, the positioning guide 201 for capturing an image of a sole is displayed on the imaging screen 200. However, by displaying a positioning guide 201 for capturing an image of a palm on the imaging screen 200, it becomes possible for the user to capture an image of a palm so that the palm has a specific size in the captured image. Further, a positioning guide 201 may be designed for positioning a portion of a foot or a hand, other than the sole of a foot or a palm.

In step S12, the imaging unit 11 captures a digital image of a sole or a palm. In step S13, the extraction processing unit 14 extracts the sole or the palm from the captured digital image. In a digital image obtained by imaging a sole, differences in brightness are small between inside portions of the sole and between background portions, and a difference in brightness is large between an inside portion of the sole and a background portion. Thus, the extraction processing unit 14 can detect the contour of a sole or a palm and extract the portion inside the contour as the sole or the palm, by identifying the portions where the brightness of the digital image discontinuously changes. However, the process of extracting a sole or a palm may be performed by a method different from the exemplified process. Note that, in a case where the size of the sole or the palm extracted by the extraction processing unit 14 significantly differs from the size of the positioning guide 201, the image creating apparatus 10A may prompt the user to recapture of an image of the sole or the palm. In step S14, the first image creating unit 15 creates a stamp by converting the silhouette of the sole or palm extracted by the extraction processing unit 14 into a black-and-white image. The stamp created by the first image creating unit 15 is stored into the image storage unit 20. Note that the stamp to be created by the first image creating unit 15 is not necessarily a black-and-white image, and may be a gradation image or an image in two or more colors. Alternatively, the stamp to be created by the first image creating unit 15 may be a line drawing.

When creating a stamp, the first image creating unit 15 may perform at least one of correction to widen the MP joint portion in the foot width direction or correction to narrow the arch of the foot, on the sole extracted by the extraction processing unit 14. In a case where a paint is applied to a sole, and a footprint is transferred onto a sheet-like medium, the shape of the sole changes due to the weight of the footprint creator. Therefore, the state of the sole in an image captured by the digital camera is slightly different from the footprint created by applying a paint to the sole. In a case where the first image creating unit 15 subjects the sole extracted by the extraction processing unit 14 to correction to widen the MP joint portion in the foot width direction and narrow the arch portion, it is possible to create a stamp closest to the footprint created by applying a paint to the sole. When creating a stamp, the first image creating unit 15 may also perform correction to form gaps between the tips of the toes and the balls of the foot, on the sole extracted by the extraction processing unit 14. Note that the balls of the foot are the portions at the roots of the toes, including the hypothenar and the thenar. In a case where a paint is applied to a sole, and a footprint is transferred to a sheet-like medium, the joint portions of the toes are unlikely to be in contact with the sheet-like medium, and therefore, gaps are normally formed between the tips of the toes and the balls of the foot. As the first image creating unit 15 subjects the sole extracted by the extraction processing unit 14 to the correction to form gaps between the tips of the toes and the balls of the foot, a stamp close to the footprint created by applying a paint to the sole can be created. Such correction can also be applied to a palm.

Note that the first image creating unit 15 may receive a contrast adjustment operation by the user, so that the user can adjust the contrast of a stamp.

As the image creating apparatus 10A according to the first embodiment displays the positioning guide 201 on the imaging screen 200, the user can record a state of a sole or a palm by capturing a digital image of the sole or the palm so that the sole or the palm has a specific size in the digital image.

### (Second Embodiment)

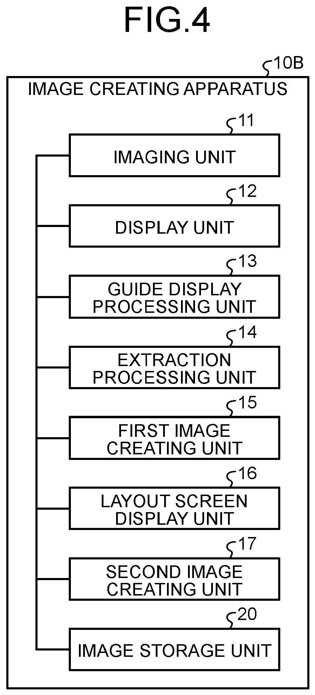

FIG. 4 is a diagram illustrating the configuration of an image creating apparatus according to a second embodiment of the present invention. An image creating apparatus 10B according to the second embodiment differs from the image creating apparatus 10A according to the first embodiment in including a layout screen display unit 16 that displays a layout screen for receiving an operation of laying out a stamp and a part registered in advance, and a second image creating unit 17 that creates an art image including the stamp and the parts laid out with the use of the layout screen. An art image is an illustration or an image intended by the user using one or more stamps. An art image is not necessarily an image indicating the shape of an existing organism or article.

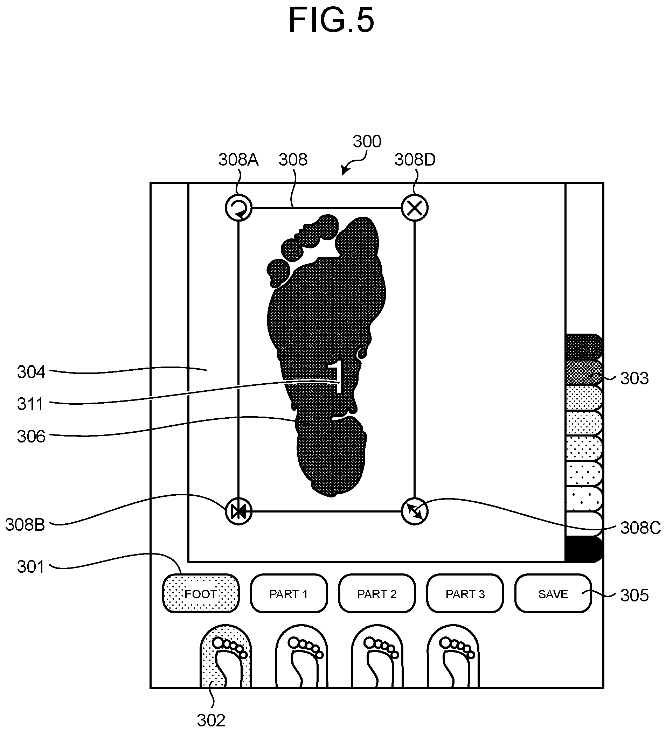

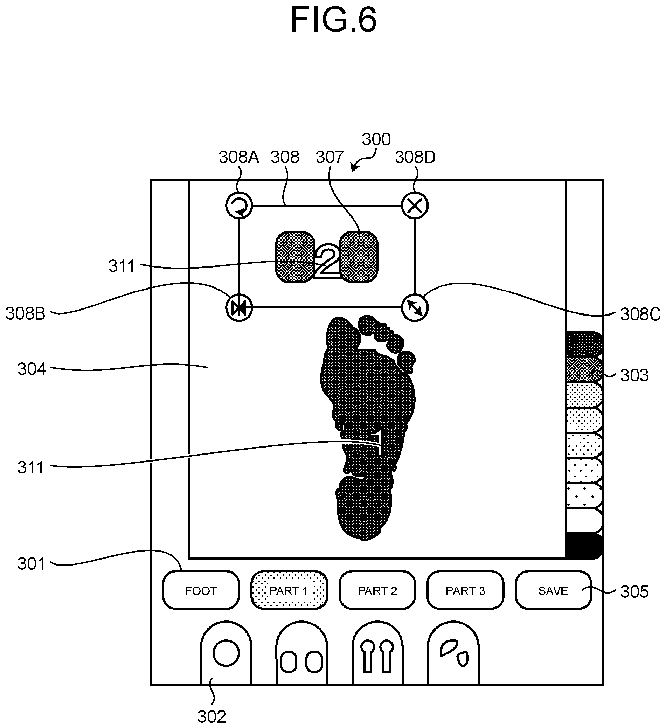

FIG. 5 is a diagram illustrating an example of the layout screen of the image creating apparatus according to the second embodiment. FIG. 6 is a diagram illustrating another example of the layout screen of the image creating apparatus according to the second embodiment. On a layout screen 300, type selection buttons 301, object selection buttons 302, color selection buttons 303, an editing area 304, and a save button 305 are displayed. The type selection buttons 301 are buttons for selecting whether to place a stamp 306 or to place a part 307. As illustrated in FIG. 5, when a "FOOT" button is pressed, the target to be placed in the editing area 304 is a stamp 306. As illustrated in FIG. 6, when one of "PART 1", "PART 2", and "PART 3" is pressed, the target to be placed in the editing area 304 is a part 307 registered in advance.

The object selection buttons 302 are buttons for selecting an object to be placed in the editing area 304. In the example illustrated in FIG. 5, four object selection buttons 302 for stamps 306 are displayed. The stamps 306 to be selected by the respective object selection buttons 302 are the same images but are distinguished from one another. The stamps 306 to be selected by the respective object selection buttons 302 cannot be used in an overlapping manner. Therefore, in the example illustrated in FIG. 5, the upper limit number of the stamps 306 that can be placed in the editing area 304 is four.

The layout screen display unit 16 displays a layer number 311 indicating the overlap relationship on the layout screen 300, together with a stamp 306 and a part 307 being laid out on the layout screen 300. As a layer number 311 is displayed together with a stamp 306 and a part 307, the user can easily understand the overlapping order of the stamp 306 and the part 307.

In a case where the object to be placed in the editing area 304 is a part 307, the object to be placed in the editing area 304 is selected from among the parts 307 registered beforehand in association with the respective parts of "PART 1", "PART 2", and "PART 3". It is also possible to select the same part 307 for "PART 1"**,** "PART 2", and "PART 3" in an overlapping manner.

An object transformation tool 308 is displayed around the stamp 306 or the part 307 placed in the editing area 304. The object transformation tool 308 includes a rotation button 308A, a reverse button 308B, and a zoom button 308C, and a user can perform a transformation operation such as rotation, reversal, and scaling of an object. The object transformation tool 308 also includes a transformation end button 308D. After an object transformation operation is completed, the object transformation tool 308 can be deleted from the editing area 304.

After the placement and the transformation of the stamp 306 and the part 307 are completed, the save button 305 is pressed, so that the second image creating unit 17 combines the stamp 306 and the part 307, to create an art image. The art image created by the second image creating unit 17 is stored into the image storage unit 20.

As the image creating apparatus 10B according to the second embodiment creates an art image using a stamp 306 in which a state of a sole or a palm is recorded, it is possible to enhance the user's motivation to capture an image of a sole or a palm and record a state of the sole or the palm. Also, by disclosing a created art image on the Internet using a social networking service, it is possible to share an image captured for recording a sole or a palm with a large number of unspecified people. Further, unlike a footprint or a handprint created by applying a paint to a sole or a palm of a user, a stamp 306 is created by the image creating apparatus 10B according to the second embodiment without any paint applied to a sole or a palm of a user. Thus, it is possible to create an art image without smearing clothes and the like.

### (Third Embodiment)

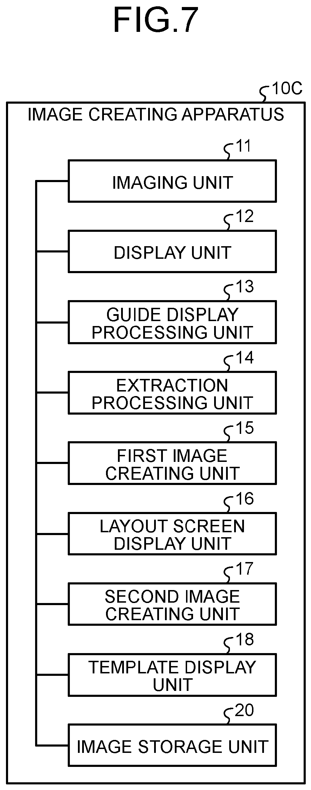

FIG. 7 is a diagram illustrating the configuration of an image creating apparatus according to a third embodiment of the present invention. An image creating apparatus 10C according to the third embodiment differs from the image creating apparatus 10B according to the second embodiment in including a template display unit 18 that displays a template on the layout screen 300.

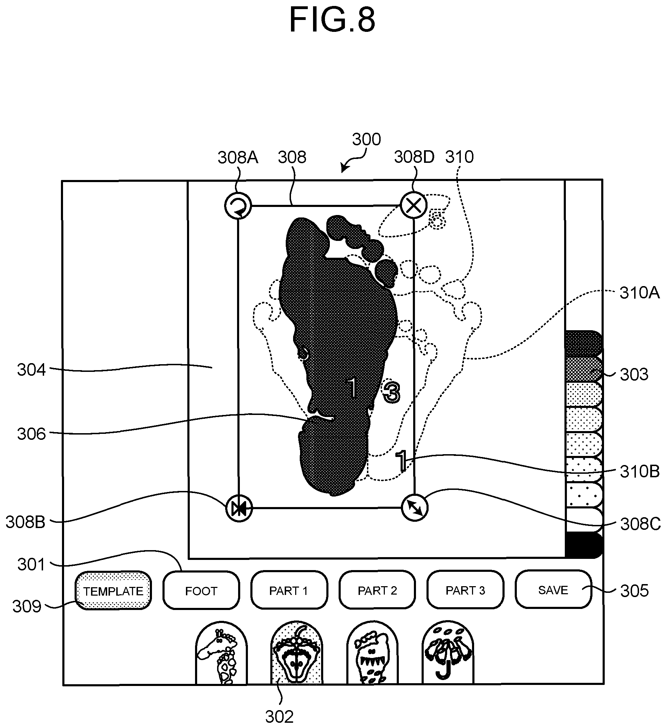

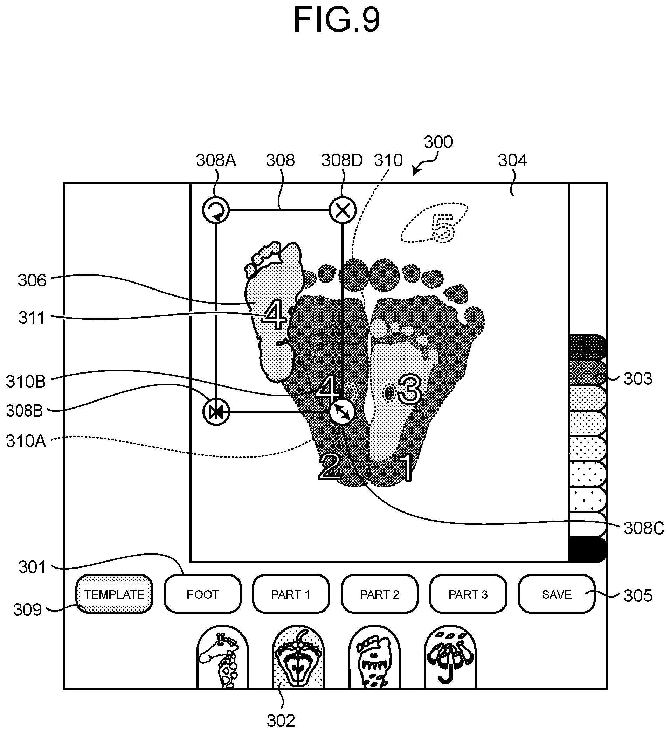

FIG. 8 is a diagram illustrating an example of the layout screen of the image creating apparatus according to the third embodiment. On the layout screen 300, type selection buttons 301, object selection buttons 302, color selection buttons 303, an editing area 304, a save button 305, and a template display button 309 are displayed. The template display button 309 is a button for selecting a template 310 as the object to be placed in the editing area 304. In the example illustrated in FIG. 8, the "TEMPLATE" button is pressed, and accordingly, the object to be placed in the editing area 304 is a template 310. The template 310 is an object that indicates the sizes, the orientations, and the placement order of a stamp 306 and a part 307. The template 310 includes a layout frame 310A and a placement order number 310B. The sizes and the orientations of the stamp 306 and the part 307 are adjusted to those of the layout frame 310A, and superimposition is performed in accordance with the order indicated by the placement order number 310B. Thus, an art image using the stamp 306 can be easily created. FIG. 9 is a diagram illustrating an example of the layout screen on which a stamp and a part are being laid out with the template of the image creating apparatus according to the third embodiment. In FIG. 9, an apple template 310 is selected, and a stamp 306 and a part 307 having sizes and orientations adjusted to the template 310 are placed in the order according to the template 310. Thus, an art image of an apple can be easily created.

As the image creating apparatus 10C according to the third embodiment displays a template 310 in the editing area 304 of the layout screen 300, the user can easily perform the operation of combining a stamp 306 and a part 307 by referring to the template 310.

### (Fourth Embodiment)

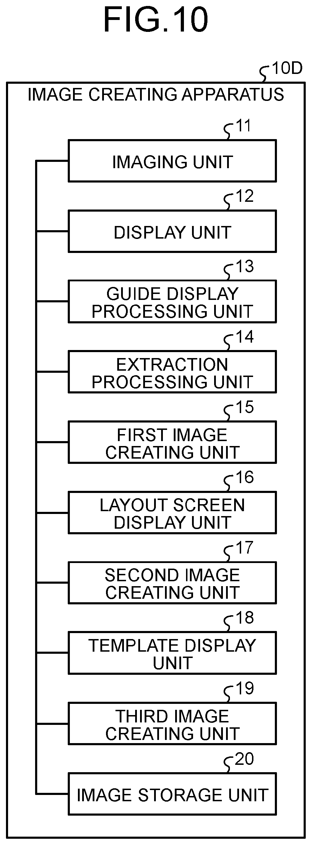

FIG. 10 is a diagram illustrating the configuration of an image creating apparatus according to a fourth embodiment of the present invention. An image creating apparatus 10D according to the fourth embodiment differs from the image creating apparatus 10C according to the third embodiment in including a third image creating unit 19. The third image creating unit 19 combines an art image created by the second image creating unit 17 with a pre-registered frame, to create a practical image that is an art image accompanied by a frame. Examples of such frames include, but are not limited to, calendars and message cards. The practical image created by the third image creating unit 19 is stored into the image storage unit 20.

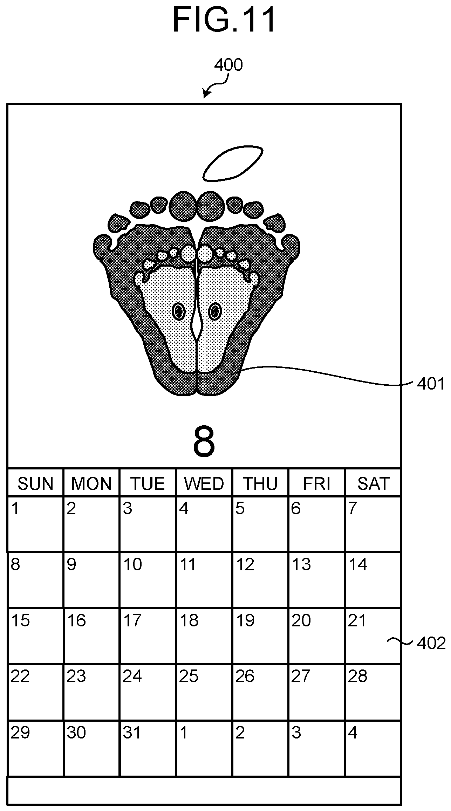

FIG. 11 is a diagram illustrating an example of a practical image created by the third image creating unit of the image creating apparatus according to the fourth embodiment. In a practical image 400, an art image 401 and a calendar frame 402 are combined. In the practical image 400, the portion of the calendar frame 402 has a calendar function. Accordingly, the user can use the practical image 400 daily, including the art image 401 created on the basis of an image in which a state of a sole or a palm is recorded. For example, the user can use the practical image 400 daily, by printing out and posting the practical image 400, or by using the practical image 400 as a wallpaper image on a smartphone terminal or a personal computer.

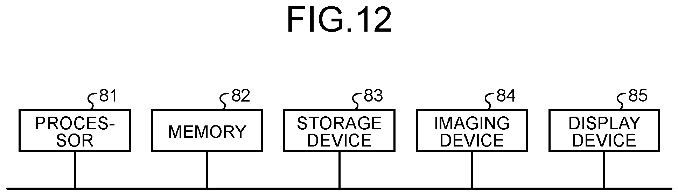

Next, a hardware configuration of the image creating apparatuses 10A, 10B, 10C, and 10D according to the respective embodiments described above is described. FIG. 12 is a diagram illustrating an example hardware configuration of the image creating apparatuses according to the first to fourth embodiments. FIG. 12 illustrates a hardware configuration in a case where hardware for executing a program is used to achieve the functions of the image creating apparatuses 10A, 10B, 10C, and 10D.

The image creating apparatuses 10A, 10B, 10C, and 10D each include: a processor 81 that executes various kinds of processing; a memory 82 that is a built-in memory; a storage device 83 that stores information; an imaging device 84 that captures a digital image; and a display device 85. The processor 81 reads a program stored in the storage device 83 into the memory 82, and executes the program. The image storage unit 20 is formed with the storage device 83. The imaging unit 11 is formed with the imaging device 84. The display unit 12 is formed with the display device 85.

As described above, the image creating apparatuses 10A, 10B, 10C, and 10D according to the present invention each include: a guide display processing unit 13 that displays a positioning guide 201 for a portion of a hand or a foot on an imaging screen 200 of a terminal having an image capturing function; an extraction processing unit 14 that extracts the portion of the hand or the foot from a digital image captured by the image capturing function; and a first image creating unit 15 that creates a stamp 306 by converting the extracted image of the portion of the hand or the foot into a silhouette image. Thus, the image creating apparatuses 10A, 10B, 10C, and 10D according to the present invention enables a user to capture a digital image of a sole or a palm so that the sole or the palm has a specific size in the digital image, and create a stamp 306 from the digital image.

An image creating apparatus according to the present invention may also include: a layout screen display unit 16 that displays a layout screen 300 for receiving an operation of laying out a stamp 306 and a pre-registered part 307, and a second image creating unit 17 that creates an art image 401 including the stamp 306 and the part 307 laid out with the use of the layout screen. Thus, the user can easily create an art image 401 including a footprint or a handprint.

Further, the second image creating unit 17 creates an art image 401 including stamps 306 and parts 307 equal to or less than a preset upper limit number. Thus, it is possible to prevent the art image 401 from becoming a complicated image from which the original shape of a stamp 306 cannot be recognized.

A template display unit 18 that displays a template 310 showing a sample layout of stamps 306 and parts 307 is also provided on the layout screen 300. Thus, even a user who is unfamiliar with image creation can easily create an art image 401.

The layout screen display unit 16 also displays a layer number 311 indicating the overlap relationship on the layout screen 300, together with the stamps 306 and the parts 307 being laid out on the layout screen 300. Thus, the user can easily understand the order of overlapping of the stamps 306 and the parts 307.

The first image creating unit 15 creates a stamp 306 by subjecting a sole extracted by the extraction processing unit 14 to at least one of correction to widen the MP joint portion in the foot width direction or correction to narrow the arch of the foot. Thus, it is possible to create a stamp 306 close to a footprint or a handprint created by applying a paint to a sole or a palm.

Alternatively, the first image creating unit 15 creates a stamp 306 by subjecting a sole extracted by the extraction processing unit 14 to correction to form gaps between the tips of the toes and the balls of the foot. Thus, it is possible to create a stamp 306 close to a footprint or a handprint created by applying a paint to a sole or a palm.

An image creating apparatus according to the present invention may further include a third image creating unit 19 that combines an art image 401 with a pre-registered frame, to create an art image accompanied with a frame. Thus, a user can combine an art image 401 including a stamp 306 with a practical frame such as a calendar, to create a framed art image with which the user can appreciate the art image 401 on a daily basis in real life.

The configuration described in the above embodiment is merely an example of the content of the present invention, and can be combined with another known technique. Also, part of the configuration can be omitted or modified, without departing from the scope of the present invention.

For example, in the respective embodiments described above, the image creating apparatuses 10A, 10B, 10C, and 10D each including the imaging unit 11 and the display unit 12 have been described, but the present invention is not limited to this. For example, the image creating apparatuses 10A, 10B, 10C, and 10D may have a configuration that excludes the imaging unit 11 and the display unit 12. In this case, by connecting a terminal including an imaging device and a display device to any of the image creating apparatuses 10A, 10B, 10C, and 10D, the user can easily capture a digital image so that a sole or a palm has a specific size in the digital image. Examples of the terminal including an imaging device and a display device include a digital camera, a smartphone terminal, and a tablet terminal. The mode of communication between the terminal including an imaging device and a display device, and the image creating apparatuses 10A, 10B, 10C, and 10D may be wireless communication, or may be cable communication.

An image creating apparatus according to the present invention effectively enables a user to capture a digital image of a sole or a palm so that the sole or the palm has a specific size in the digital image, and create a stamp from the digital image.

## Claims

1. An image creating apparatus (10A,10B,10C,10D) comprising:
a guide display processing unit (13) that displays a positioning guide for a portion of a hand or a foot on an imaging screen of a terminal having an image capturing function;
an extraction processing unit (14) that extracts the portion of the hand or the foot from a digital image captured by the image capturing function; and
a first image creating unit (15) that creates an image (306) by converting the extracted image of the portion of the hand or the foot into a silhouette image,
**characterized in that**:
the extraction processing unit (14) performs a process of extracting a sole from the digital image; and
the first image creating unit (15) creates the image (306) by subjecting the sole extracted by the extraction processing unit (14) to at least one of:
(a) a correction to widen a MP joint portion in a foot width direction;
(b) a correction to narrow the arch of the foot; or
(c) a correction to form gaps between tips of toes and balls of the foot.

2. The image creating apparatus (10B,10C,10D) according to claim 1, comprising:
a layout screen display unit (16) that displays a layout screen (300) for receiving an operation of laying out the created image (306) and a part (307) registered in advance; and
a second image creating unit (17) that creates an art image (401) including the created image (306) and the part (307) laid out with the layout screen (300).

3. The image creating apparatus (10B,10C,10D) according to claim 2, wherein the second image creating unit (17) creates an art image (401) including the created images (306) and the parts (307), the number of the created images (306) and the parts (307) being equal to or smaller than a preset upper limit number.

4. The image creating apparatus (10C,10D) according to claim 2 or 3, comprising a template display unit (18) that displays, on the layout screen (300), a template (310) showing a sample layout of the created image (306) and the part (307).

5. The image creating apparatus (10C,10D) according to claim 4, wherein the layout screen display unit (16) displays a layer number (311) indicating an overlap relationship on the layout screen (300), together with the created image (306)and the part (307) being laid out on the layout screen (300).

6. The Image creating apparatus (10D) according to any one of claims 2 to 5, comprising a third image creating unit (19) that combines the art image (401) with a pre-registered frame, to create an art image (401) accompanied by a frame.

## Patentansprüche

1. Bilderzeugungseinrichtung (10A, 10B, 10C, 10D) umfassend:
eine Führungsanzeigeverarbeitungseinheit (13), welche eine Positionierungsführung für einen Abschnitt einer Hand oder eines Fußes auf einem Abbildungsschirm eines Endgeräts, das eine Bilderfassungsfunktion aufweist, anzeigt;
eine Extraktionsverarbeitungseinheit (14), welche den Abschnitt der Hand oder des Fußes aus einem digitalen Bild extrahiert, welches von der Bilderfassungsfunktion erfasst wurde; und
eine erste Bilderzeugungseinheit (15), welche ein Bild (306) erzeugt, indem sie das extrahierte Bild des Abschnitts der Hand oder des Fußes in ein Schattenbild umwandelt,
**dadurch gekennzeichnet, dass**:
die Extraktionsverarbeitungseinheit (14) einen Prozess zum Extrahieren einer Sohle aus dem digitalen Bild durchführt; und
die erste Bilderzeugungseinheit (15) das Bild (306) erzeugt, indem sie die von der Extraktionsverarbeitungseinheit (14) extrahierte Sohle zumindest einem der folgenden unterzieht:
(a) einer Korrektur zum Verbreitern eines MP-Gelenkabschnitts in Fußbreitenrichtung;
b) einer Korrektur zum Verengen des Fußgewölbes; oder
(c) einer Korrektur, um Lücken zwischen den Zehenspitzen und den Fußballen zu bilden.

2. Bilderzeugungseinrichtung (10B, 10C, 10D) nach Anspruch 1, umfassend:
eine Layout-Bildschirmanzeigeeinheit (16), welche einen Layout-Bildschirm (300) zum Empfangen eines Vorgangs zum Gestalten des erzeugten Bildes (306) und eines zuvor registrierten Teils (307) anzeigt; und
eine zweite Bilderzeugungseinheit (17), welche ein Kunstbild (401) erzeugt, welches das erzeugte Bild (306) und den mit dem Layout-Bildschirm (300) gestalteten Teil (307) beinhaltet.

3. Bilderzeugungseinrichtung (10B, 10C, 10D) nach Anspruch 2, wobei die zweite Bilderzeugungseinheit (17) ein Kunstbild (401) erzeugt, welches die erzeugten Bilder (306) und die Teile (307) beinhaltet, wobei die Anzahl der erzeugten Bilder (306) und der Teile (307) gleich oder kleiner als eine voreingestellte obere Grenzzahl ist.

4. Bilderzeugungseinrichtung (10C,10D) nach Anspruch 2 oder 3, umfassend eine Vorlagenanzeigeeinheit (18), welche auf dem Layout-Bildschirm (300) eine Vorlage (310) anzeigt, welche ein Beispiel-Layout des erzeugten Bildes (306) und des Teils (307) zeigt.

5. Bilderzeugungseinrichtung (10C,10D) nach Anspruch 4, wobei die Layout-Bildschirmanzeigeeinheit (16) eine Ebenennummer (311) anzeigt, welche zusammen mit dem erzeugten Bild (306) und dem auf dem Layout-Bildschirm (300) gestalteten Teil (307) eine Überlappungsbeziehung auf dem Layout-Bildschirm (300) angibt.

6. Bilderzeugungseinrichtung (10D) nach einem der Ansprüche 2 bis 5, umfassend eine dritte Bilderzeugungseinheit (19), welche das Kunstbild (401) mit einem vorregistrierten Rahmen kombiniert, um ein Kunstbild (401), das von einem Rahmen begleitet wird, zu erzeugen.

## Revendications

1. Appareil de création d'images (10A, 10B, 10C, 10D) comprenant :
une unité de traitement d'affichage de guide (13) qui affiche un guide de positionnement pour une partie d'une main ou d'un pied sur un écran d'imagerie d'un terminal doté d'une fonction de capture d'image ;
une unité de traitement d'extraction (14) qui extrait la portion de la main ou du pied d'une image numérique capturée par la fonction de capture d'image ; et
une première unité de création d'image (15) qui crée une image (306) en convertissant l'image extraite de la partie de la main ou du pied en une image de silhouette,
**caractérisé en ce que** :
l'unité de traitement d'extraction (14) effectue un processus d'extraction d'une semelle à partir de l'image numérique ; et
la première unité de création d'image (15) crée l'image (306) en soumettant la semelle extraite par l'unité de traitement d'extraction (14) à au moins l'une des opérations suivantes :
(a) une correction pour élargir une partie d'articulation MP dans le sens de la largeur du pied ;
(b) une correction visant à rétrécir la voûte plantaire ; ou
(c) une correction pour former des espaces entre le bout des orteils et la plante du pied.

2. Appareil de création d'images (10B, 10C, 10D) selon la revendication 1, comprenant :
une unité d'affichage d'écran de présentation (16) qui affiche un écran de présentation (300) pour recevoir une opération de présentation de l'image créée (306) et d'une partie (307) enregistrée au préalable ; et
une deuxième unité de création d'image (17) qui crée une image artistique (401) incluant l'image créée (306) et la partie (307) disposée avec l'écran de présentation (300).

3. Appareil de création d'images (10B, 10C, 10D) selon la revendication 2, dans lequel la deuxième unité de création d'images (17) crée une image artistique (401) incluant les images créées (306) et les parties (307), le nombre des images créées (306) et des parties (307) étant égal ou inférieur à un nombre limite supérieur prédéfini.

4. Appareil de création d'images (10C,10D) selon la revendication 2 ou 3, comprenant une unité d'affichage de modèle (18) qui affiche, sur l'écran de présentation (300), un modèle (310) montrant un exemple de présentation de l'image créée (306) et de la partie (307).

5. Appareil de création d'images (10C,10D) selon la revendication 4 dans lequel l'unité d'affichage de l'écran de présentation (16) affiche un numéro de couche (311) indiquant une relation de chevauchement sur l'écran de présentation (300), ainsi que l'image créée (306) et la partie (307) en cours de préparation sur l'écran de préparation (300).

6. Appareil de création d'images (10D) selon l'une quelconque des revendications 2 à 5, comprenant une troisième unité de création d'images (19) qui combine l'image artistique (401) avec un cadre pré-enregistré, pour créer une image artistique (401) accompagnée d'un cadre.
